Europäisches Patentamt

European Patent Office

Office européen des brevets

(19)

(11) Veröffentlichungsnummer: **0 289 745 B1**

## EUROPÄISCHE PATENTSCHRIFT

(12)

(45) Veröffentlichungstag der Patentschrift: **28.10.92**

(51) Int. Cl.⁵: **B21D 5/14**, B21D 51/26

(21) Anmeldenummer: **88103853.3**

(22) Anmeldetag: **11.03.88**

(54) **Rundapparat für eine Dosenschweissmaschine.**

(30) Priorität: **05.05.87 CH 1714/87**

(43) Veröffentlichungstag der Anmeldung:
**09.11.88 Patentblatt 88/45**

(45) Bekanntmachung des Hinweises auf die
Patenterteilung:
**28.10.92 Patentblatt 92/44**

(84) Benannte Vertragsstaaten:
**BE CH DE ES FR GB GR IT LI NL SE**

(56) Entgegenhaltungen:
**DE-A- 3 725 020**
**DE-C- 618 901**
**FR-A- 2 100 162**
**US-A- 4 133 197**

(73) Patentinhaber: **ELPATRONIC AG**
**Baarerstrasse 112**
**CH-6300 Zug(CH)**

(72) Erfinder: **Alznauer, Kurt**
**Bergstrasse 7**
**W-7898 Lauchringen(DE)**

Rank Xerox (UK) Business Services

## Beschreibung

Die Erfindung betrifft einen Rundapparat für eine Dosenschweißmaschine, mit einer Vorrichtung zum Zuführen von Blechzuschnitten, mit einem Rundwalzenpaar zum Einrunden der Blechzuschnitte, mit einem Rundschalenwerkzeug, das einen zwischen einer Innenschale und einer Außenschale gebildeten Schlitz zum Führen der gerundeten Blechzuschnitte aufweist, und mit einem am Ende des Schlitzes vorgesehenen Anschlag für die Blechzuschnitte.

Solche Rundapparate finden Verwendung in Laser- oder Widerstandsnahtschweißmaschinenzum Längsnahtschweißen von Dosenrümpfen, sogenannten Zargen. In dem Rundapparat werden die Zargen durch Einrunden von zugeführten ebenen Blechzuschnitten hergestellt. Die Zargen werden anschließend durch Nocken von Transportketten erfaßt und über eine Z-Schiene, die die zu verschweißenden Zargenränder führt, einer Laser- oder Elektrodenrollenschweißeinrichtung zugeführt, die die Zargenränder miteinander verschweißt.

Bei einem Rundapparat der eingangs genannten Art bewegt sich der Blechzuschnitt in dem Schlitz üblicherweise mit hoher Geschwindigkeit (ca. 5 m/s). Wenn der Schlitz so breit ist, dass die Zarge nicht geführt wird, so hat diese viel Platz, um durch elastische oder plastische Deformation die am Anschlag auftretende Aufschlagenergie aufzuzehren, so dass die beiden zu verschweissenden Längsränder der Zarge für den Weitertransport durch die Transportkettennocken in einer definierten Endlage sind. Das ist zwar erwünscht, jedoch sind plastische Deformationen des Bleches gänzlich unzulässig. Ueberdies kann auch das elastische Federn der Dosenkörper zu einer undefinierten Endlage führen, die den Weitertransport beeinträchtigt. Es ist auch bereits versucht worden, am Schalenwerkzeug des Rundapparates einen engen Schlitz von nur 1 mm Höhe vorzusehen. In diesem Fall werden die Blechzuschnitte zwar einwandfrei geführt, ein Abfedern der Aufprallenergie ist jedoch dann nicht mehr möglich. Die Bleche bewegen sich daher mit voller Geschwindigkeit gegen den festen Anschlag. Dies führt wiederum zum Zurückspringen der Blechabschnitte, wodurch die Blechränder während des Weitertransports nicht in der gewünschten definierten Endlage sind. Dies führt dann zu Transportschwierigkeiten oder zum unvermeidlichen Crash. Ausserdem besteht die Gefahr, dass die Vorderkante des einlaufenden Blechzuschnitts beim Aufprall auf den festen Anschlag gestaucht bzw. plastisch deformiert wird.

Bei einem bekannten Rundapparat für Blechzuschnitte, bei dem diese nach dem Durchlaufen der Rundwalzen nicht in ein Rundschalenwerkzeug einlaufen, sondern sich um die eine, rotierende Rundwalze herumlegen (US-A-4,133,197), stösst die Vorderkante des Blechzuschnitts gegen einen Anschlag, der längs einer Mantellinie gegen die Walzenoberfläche anliegt. Der genannte Anschlag ist an einem Blech ausgebildet, welches an einem kippbar gelagerten Winkelhebel befestigt ist. Dabei besteht die Möglichkeit, dass durch die Aufprallenergie eines einlaufenden Blechabschnittes das den Anschlag tragende Blech sich elastisch verbiegt, wobei der Anschlag sich etwas tangential zur Rundwalze bewegt und eine entsprechende Kippbewegung des Winkelhebels von einer an ihm angreifenden Feder gebremst wird. Infolge einer solchen elastischen Verbiegung muss aber ein Rückprall des frei einlaufenden Blechabschnittes angenommen werden, weshalb dann eine genaue Endlage der Blech-Vorderkante nicht sichergestellt ist.

Aufgabe der Erfindung ist es, einen Rundapparat der eingangs genannten Art so zu verbessern, dass in ihm die Blechzuschnitte am Zurückspringen gehindert werden und nach dem Runden lagegenau positioniert sind, wobei auch plastische Deformationen der Blechzuschnitte verhindert werden.

Diese Aufgabe ist erfindungsgemäss dadurch gelöst, dass der Anschlag an einer Dämpfungsklappe ausgebildet ist, die seitlich neben einem Endbereich des Schlitzes auf einer zur Längsachse des Rundschalenwerkzeugs parallelen Drehachse gelagert ist, derart, dass die Dämpfungsklappe durch die Aufprallenergie eines in den Schlitz eingelaufenen Blechzuschnittes eine dämpfende Kippbewegung erfährt, wobei zur Dämpfung der Kippbewegung wenigstens eine Feder vorgesehen ist, und wobei die genannte Drehachse so angeordnet ist, dass bei der Kippbewegung ein Teil der Dämpfungsklappe in den Schlitz hinein bewegbar ist.

Der mit hoher Geschwindigkeit den Rundapparat durchlaufende Blechzuschnitt wird nach dem Runden zwischen Innenschale und Aussenschale geführt und prallt dann mit seiner Vorderkante gegen den Anschlag, der jedoch nicht feststeht, sondern unter der Aufprallenergie des Blechzuschnitts eine gedämpfte Kippbewegung ausführt, die den Blechzuschnitt sanft abbremst. Durch den in den Schlitz hinein bewegten Teil der Dämpfungsklappe wird zudem der Blechzuschnitt kurzzeitig festgeklemmt. Dadurch wird ein Zurückspringen der Zargen vom Anschlag besonders wirksam verhindert und die Zargen sind nach dem Runden lagegenau positioniert. Durch die Federn wird anschliessend die Dämpfungsklappe zurückgestellt und die Zargen können aus dem Bereich des Rundapparates problemlos weitertransportiert werden. Zur Dämpfung der Kippbewegung könnte auch eine Oeldämpfung o. dgl. vorgesehen sein.

Vorteilhafte Ausgestaltungen der Erfindung bilden den Gegenstand der abhängigen Ansprüche.

Ein Ausführungsbeispiel der Erfindung wird im folgenden unter Bezugnahme auf die Zeichnung näher beschrieben. Es zeigt:

Fig. 1 eine aufgebrochene Gesamtdarstellung einer Dosenschweissmaschine, die mit dem Rundapparat nach der Erfindung versehen ist,

Fig. 2 die Dartellung eines Teils der Maschine nach Fig. 1 in einem grösseren Massstab,

Fig. 3 eine noch grössere, teilweise auseinandergezogene Darstellung des Rundapparats, und

Fig. 4 eine Teilquerschnitt-Darstellung des Rundapparats nach Fig. 3.

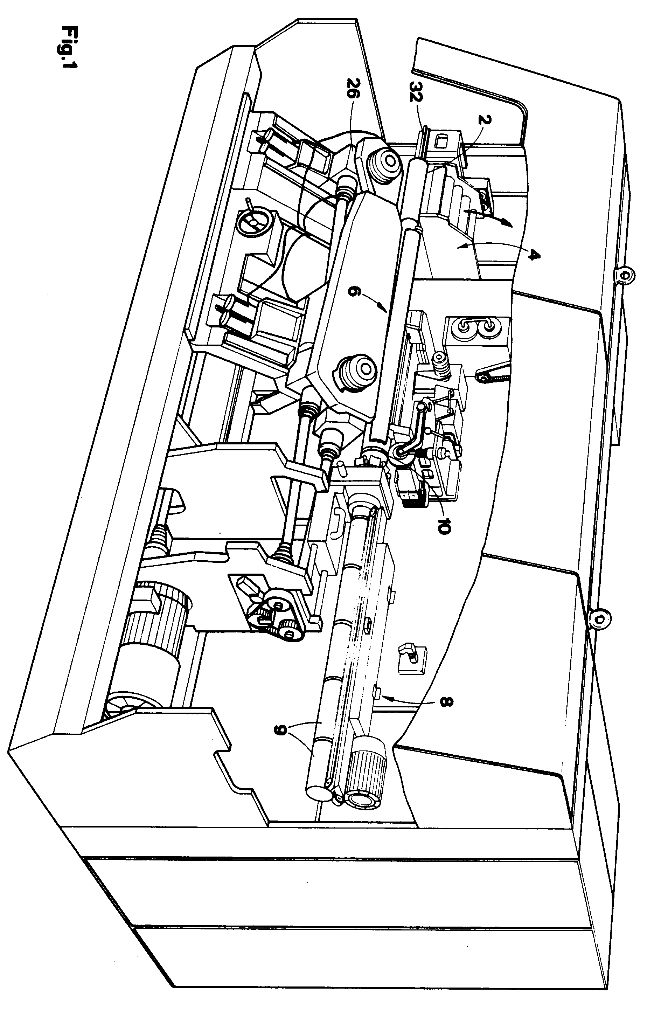

Fig. 1 zeigt eine aufgebrochene Gesamtansicht einer Dosenschweißmaschine, bei der es sich zwar um eine Widerstandsnahtschweißmaschine mit einer oberen Elektrodenrolle 10 und einer unteren Elektrodenrolle (nicht sichtbar) handelt, die jedoch ohne weiteres auch eine Laserschweißmaschine sein könnte. Die Dosenschweißmaschine weist in der Darstellung in Fig. 1 von links nach rechts hintereinander einen Rundapparat 2, eine Z-Schienenvorrichtung 6, das Elektrodenrollenpaar und eine Vorrichtung 8 zum Wegtransportieren von längsnahtgeschweißten Zargen 9 auf. Dem Rundapparat 2 ist ein insgesamt mit 4 bezeichneter Abstapler zugeordnet, bei welchem es sich um eine Vorrichtung handelt, die dem Rundapparat Blechzuschnitte 5 zuführt. Die Z-Schienenvorrichtung 6 transportiert die gerundeten Blechzuschnitte oder Zargen mit richtiger gegenseitiger Relativlage von deren zu verschweißenden Längsrändern zu dem Elektrodenrollenpaar, das die Längsränder miteinander verschweißt.

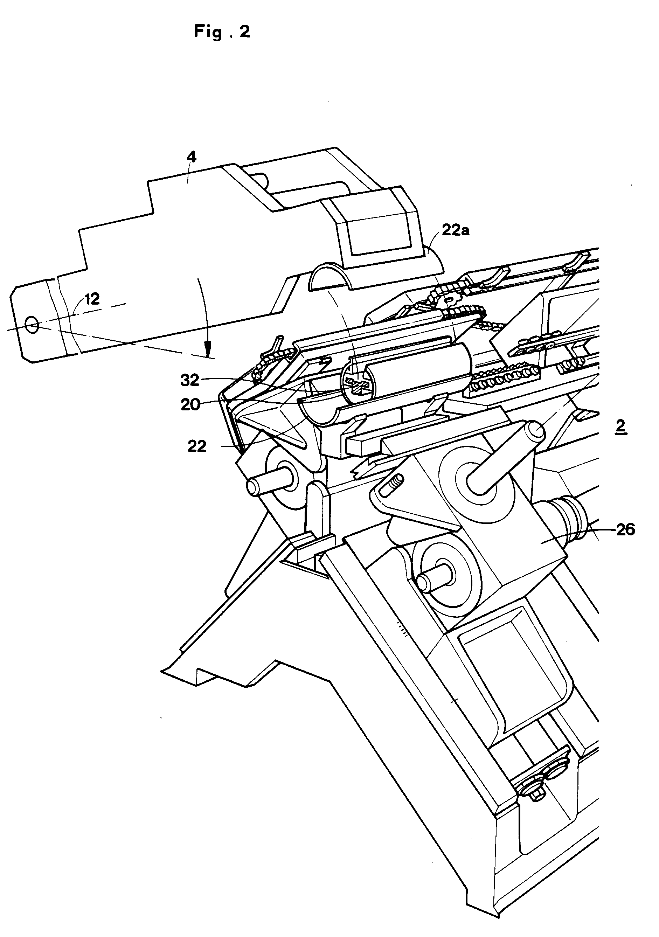

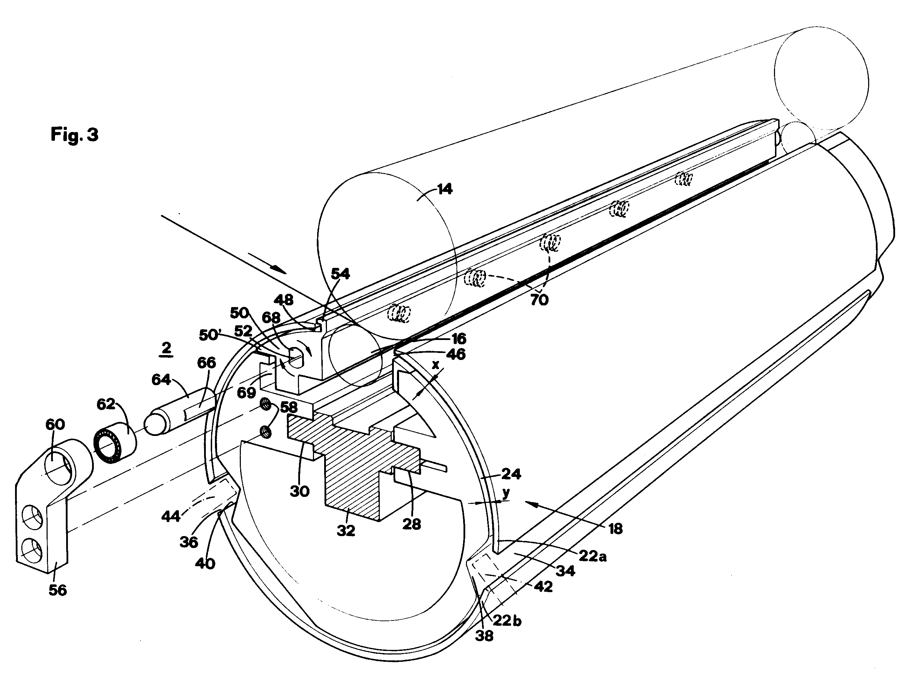

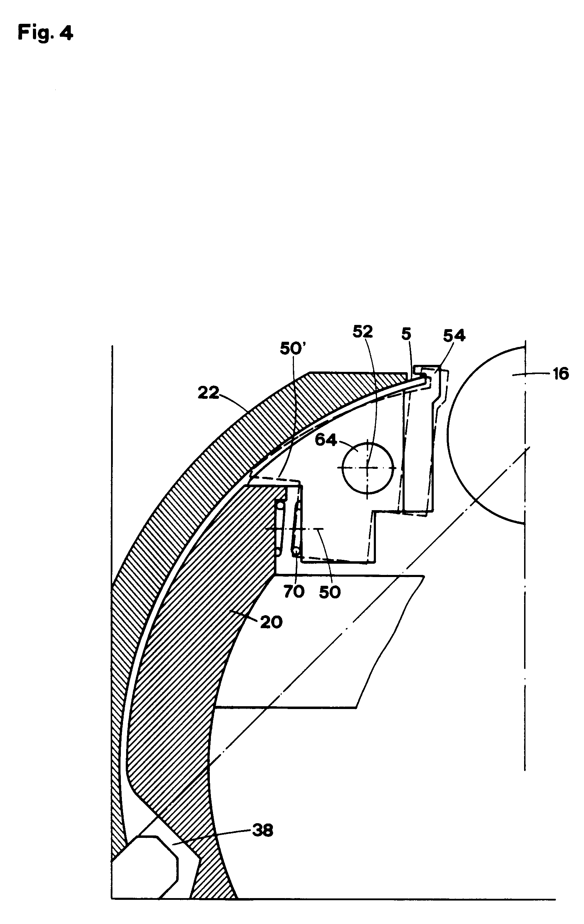

Der Rundapparat 2 ist ausführlicher in Fig. 2 gezeigt. Der Abstapler 4 ist um eine zur Maschinenlängsachse parallele Achse 12 verschwenkbar und daher von dem Rundapparat 2 abhebbar. Der Abstapler 4 fördert die Blechzuschnitte 5 auseinem Magazin (nicht dargestellt) nacheinander in den Rundapparat 2. Der eigentliche Rundungsvorgang findet in einem Rundwalzenpaar statt, das aus einer oberen Rundwalze 14 und einer unteren Rundwalze 16 besteht.Durch die sich gegenläufig drehenden Rundwalzen 14, 16 werden die Blechzuschnitte in ein Rundschalenwerkzeug 18 eingerundet, das einen zwischen einer Innenschale 20 und einer Außenschale 22 gebildeten Schlitz 24 zum Führen der gerundeten Blechzuschnitte aufweist. Die Außenschale 22 besteht aus einer oberen Führungsschale 22a, die an dem Auslaßende des Abstaplers 4 befestigt ist, und aus einer unteren Fangschale 22b. Die untere Fangschale 22b ist auf einem Getriebe 26 montiert, das in dem Antriebsstrang des Rundapparats 2 vorgesehen ist (Fig. 2). Die Innenschale 20 ist als einstückiges Teil ausgebildet, das innen einander gegenüberliegende Längsnuten 28, 30 hat, die entsprechende Flansche einer T-Schiene 32 zur Befestigung der Innenschale 20 aufnehmen (Fig. 3). Zwischen der oberen Führungsschale 22a und der unteren Fangschale 22b ist auf beiden Längsseiten Abstand vorhanden. Dadurch sind Schlitze 34, 36 vorhanden, hinter denen die Innenschale 20 mit Aussparungen 38 bzw. 40 versehen ist, so daß Transportkettennocken 42 bzw. 44 gerundete Zargen auf beiden Längsseiten erfassen können, um sie zur Z-Schienenvorrichtung 6 zu transportieren. Der Schlitz 24 nimmt in seiner Höhe von seinem Eingang 46 bis zu seinem Ende 48 ständig ab. Für in Fig. 3 angegebene beliebige Schlitzhöhen x und y gilt also x > y. Der vor dem Schlitzende 48 gelegene Schlitzteil wird außen durch die Außenschale 22 und innen durch eine Dämpfungsklappe 50 gebildet, die an dieser Stelle also einen Teil der Innenschale 20 ersetzt. Die Krümmung am Umfang der Dämpfungsklappe 50 setzt die Krümmung der Innenschale 20 bis zu dem Ende 48 des Schlitzes 24 fort. Der Aufbau und die Wirkungsweise der Dämpfungsklappe werden nun unter Bezugnahme auf die Fig. 3 und 4 näher beschrieben.

Die Dämpfungsklappe 50 erstreckt sich über die gesamte Länge des Rundapparates 2 und ist um eine Drehachse 52 gedämpft bewegbar gelagert. An ihrem dem Schlitzende 48 benachbarten Umfangsende ist die Dämpfungsklappe als Blechzuschnitt-Fanghaken 54 ausgebildet. Zur drehbaren Befestigung der Dämpfungsklappe 50 an der Innenschale 20 dient ein Paar Konsolen 56, die an den Stirnseiten der Innenschale mittels Schrauben (nicht dargestellt), die in Gewindebohrungen 58 eingeschraubt werden, befestigt werden. Jede Konsole hat ein Lagerauge 60, in welchem mittels eines Nadellagers 62 ein Bolzen 64 drehbar lagerbar ist, der an seinem zu dem Lagerauge 60 entgegengesetzten Ende mit Abflachungen 66 versehen ist, so daß er in einer komplementär gestalteten Öffnung 68 der Dämpfungsklappe 50 formschlüssig aufgenommen wird. Die Drehachse 52 ist daher zur Längsachse des Rundschalenwerkzeugs 18 parallel, und die Dämpfungsklappe ist in den Nadellagern 62 um die Drehachse 52 drehbar. Die Dämpfung dieser Drehbewegung erfolgt durch Druckfedern 70 in einem Raum 69, die sich einerseits an der Innenschale 20 und andererseits an einer vertikalen Seitenwand der Dämpfungsklappe 50 abstützen. Die Lage der Drehachse 52 der Dämpfungsklappe 50 ist so gewählt, daß bei einer Bewegung des Fanghakens 54 im Uhrzeigersinn (in Fig. 4) um die Drehachse 52 ein Teil 50′ der Dämpfungsklappe entgegen der Kraft der Druckfedern 70 in Richtung zur Außenschale 22, d.h. in den Schlitz 24 bewegbar ist, und zwar zu einem Zweck, der im folgenden noch näher erläutert ist.

Der vorstehend beschriebene Rundapparat arbeitet folgendermaßen: Die Blechzuschnitte 5 werden vom Abstapler 4 in den Rundapparat 2 geschoben und in das Rundschalenwerkzeug 18 eingerundet. Am Ende der Rundung stoßen die Blechzuschnitte 5 an dem Fanghaken 54 an. Dieser gibt unter diesem Stoß nach und drückt die Dämpfungsklappe 50 entgegen der Kraft der Druckfedern 70 um die Drehachse 52 im Uhrzeigersinn und dadurch die Blechzuschnitte 5 gegen die Innenseite der Außenschale 22. Die Blechzuschnitte 5 werden auf diese Weise ca. 6 ms festgehalten und können daher nicht zurückspringen. Nach Ablauf der Zeitspanne von 6 ms wird die Dämpfungsklappe 50 über die Druckfedern 70 zurückgestellt, so daß die Zargen aus einer definierten Position von den Transportkettennocken 42, 44 übernommen werden können. In dem Rundapparat 2 erfolgt also eine Endlagendämpfung der Blechzuschnitte 5 mit dem Ziel, die mit hoher Geschwindigkeit (ca. 5 m/s) eingerundeten Zargen möglichst sanft abzubremsen und deren Zurückspringen vom Endanschlag (Fanghaken 54) zu verhindern. Erreicht wird das dadurch, daß die Aufprallenergie des Blechzuschnitts 5 an dem Fanghaken 54 zur Auslösung der Kippbewegung der Dämpfungsklappe 50 um die Drehachse 52 genutzt wird. Die Aufprallenergie wird dabei teilweise durch die Druckfedern 70 aufgezehrt, und der übrige Teil der Aufprallenergie ruft die Kippbewegung der Dämpfungsklappe 50 hervor, die schließlich zum Einklemmen des Blechzuschnitts 5 zwischen der Außenschale 22 und dem Teil 50′ der Dämpfungsklappe 50 führt. Durch das anschließende Zurückstellen der Dämpfungsklappe 50 mittels der Druckfedern 70 wird die Zarge zum Weitertransport freigegeben.

**Patentansprüche**

1. Rundapparat für eine Dosenschweissmaschine, mit einer Vorrichtung (4) zum Zuführen von Blechzuschnitten (5), mit einem Rundwalzenpaar (14, 16) zum Einrunden der Blechzuschnitte, mit einem Rundschalenwerkzeug (18), das einen zwischen einer Innenschale (20) und einer Aussenschale (22) gebildeten Schlitz (24) zum Führen der gerundeten Blechzuschnitte aufweist, und mit einem am Ende des Schlitzes vorgesehenen Anschlag für die Blechzuschnitte, dadurch **gekennzeichnet,** dass der Anschlag (54) an einer Dämpfungsklappe (50) ausgebildet ist, die seitlich neben einem Endbereich des Schlitzes (24) auf einer zur Längsachse des Rundschalenwerkzeugs (18) parallelen Drehachse (52) gelagert ist, derart, dass die Dämpfungsklappe (50) durch die Aufprallenergie eines in den Schlitz (24) eingelaufenen Blechzuschnittes (5) eine dämpfende Kippbewegung erfährt, wobei zur Dämpfung der Kippbewegung wenigstens eine Feder (70) vorgesehen ist, und wobei die genannte Drehachse (52) so angeordnet ist, dass bei der Kippbewegung ein Teil (50') der Dämpfungsklappe in den Schlitz (24) hinein bewegbar ist.

2. Rundapparat nach Anspruch 1, dadurch gekennzeichnet, dass der Anschlag als Blechzuschnitt-Fanghaken (54) ausgebildet ist.

3. Rundapparat nach Ansspruch 1, dadurch gekennzeichnet, dass die Feder (70) eine zwischen der Dämpfungsklappe (50) und der Innenschale (20) angeordnete Druckfeder ist.

4. Rundapparat nach einem der Ansprüche 1 bis 3, dadurch gekennzeichnet, dass die Dämpfungsklappe (50) sich im wesentlichen über die gesamte Länge des Rundschalenwerkzeugs (18) erstreckt.

5. Rundapparat nach einem der Ansprüche 1 bis 4, dadurch gekennzeichnet, dass die Dämpfungsklappe (50) gemeinsam mit der Aussenschale (22) einen Teil des Schlitzes (24) bildet.

**Claims**

1. Rounding apparatus for a can welding machine, having a device (4) for supplying sheet-metal blanks (5), a pair of rounding rolls (14, 16) for rounding the sheet-metal blanks, a shell-type rounding tool (18) which comprises a slit (24) formed between an inner shell (20) and an outer shell (22) to guide the rounded sheet-metal blanks, and a stop provided at the end of the slit for the sheet-metal blanks, characterised in that the stop (54) is formed on a damping flap (50) mounted laterally alongside an end region of the slit (24) on a pivot axis (52) parallel to the longitudinal axis of the shell-type rounding tool (18), such that the impact energy of a sheet-metal blank (5) entering the slit (24) causes the damping flap (50) to execute a damping tilting movement, at least one spring (70) being provided to damp the tilting movement, and said pivot axis (52) being so disposed that part (50') of the damping flap can be moved into the slit (24) during the tilting movement.

2. Rounding apparatus according to claim 1, characterised in that the stop is a catch hook (54) for the sheet-metal blanks.

3. Rounding apparatus according to claim 1, characterised in that the spring (70) is a compression spring disposed between the damping flap (50) and the inner shell (20).

4. Rounding apparatus according to any of claims 1 to 3, characterised in that the damping flap (50) extends substantially over the whole length of the shell-type rounding tool (18).

5. Rounding apparatus according to any of claims 1 to 4, characterised in that the damping flap (50) together with the outer shell (22) forms part of the slit (24).

**Revendications**

1. Appareil de cintrage pour une machine à souder les corps de boîtes, comprenant un dispositif (4) destiné à amener des découpes (5) en tôle, une paire de rouleaux (14, 16) de cintrage destinés à arrondir les découpes en tôle, un outil (18) de cintrage à Coquille présentant une fente (24) destinée à guider les découpes en tôle arrondies et constituée entre une coquille interne (20) et une coquille externe (22), et une butée pour les découpes en tôle, prévue au bout de cette fente, caractérisé en ce que la butée (54) est réalisée sur un volet amortisseur (50) logé latéralement à côté d'une partie terminale de la fente (24) sur un axe (52) de rotation paralléle à l'axe longitudinal de l'outil (18) de cintrage à coquille, de manière telle que le volet amortisseur (50) subisse, par l'énergie d'impact d'une découpe (5) en tôle arrivant dans la fente (24), un mouvement amortisseur de basculement, un ressort (70) de pression au moins étant prévu pour amortir le mouvement de basculement, et ledit axe (52) de rotation étant disposé de telle façon qu'au cours du mouvement de basculement, une partie (50') du volet amortisseur puisse être déplacé vers l'intérieur de la fente (24).

2. Appareil de cintrage selon la revendication 1, caractérisé en ce que la butée est réalisée sous forme d'un crochet (54) de captage des découpes en tôle.

3. Appareil de cintrage selon la revendication 1, caractérisé en ce que le ressort (70) disposé entre le volet amortisseur (50) et la coquille interne (20) est un ressort de pression.

4. Appareil de cintrage selon l'une des revendications 1 à 3, caractérisé en ce que le volet amortisseur (50) s'étend essentiellement sur toute la longueur de l'outil (18) de cintrage à coquille.

5. Appareil de cintrage selon l'une des revendications 1 à 4, caractérisé en ce que le volet amortisseur (50) forme en conjonction avec la coquille externe (22) une partie de la fente (24).

Fig.1

**Fig . 2**

**Fig. 3**

EP 0 289 745 B1

**Fig. 4**